Europäisches Patentamt

European Patent Office

Office européen des brevets

(19)

(11) Publication number: **0 033 858**
**A1**

(12) **EUROPEAN PATENT APPLICATION**

(21) Application number: **81100341.7**

(22) Date of filing: **17.01.81**

(51) Int. Cl.³: **H 04 M 3/30**, G 01 R 27/16

(30) Priority: **31.01.80 IT 1958480**

(43) Date of publication of application: **19.08.81**
Bulletin 81/33

(84) Designated Contracting States: **DE FR GB SE**

(71) Applicant: **ITALTEL SOCIETA' ITALIANA
TELECOMUNICAZIONI spa, P.le Zavattari, 12,
I-20149 Milano (IT)**

(72) Inventor: **Mosca, Virgilio, Prof., Via C. Battisti, 11,
I-20122 Milano (IT)**

(74) Representative: **Arena, Giovanni, ITALTEL SOCIETA'
ITALIANA TELECOMUNICAZIONI spa Patent
Department Via A. di Tocqueville, 13, I-20154 Milano (IT)**

(54) Circuit arrangement for measuring the electric characteristics of user telephone lines.

(57)    The present invention relates to a circuit arrangement particularly for use in telephone exchanges for measuring the following parameters of user telephone lines:

direct or alternating foreign voltages;

insulation resistance between a wire (a) and a wire (b);

terminal capacity;

insulation resistance between wires (a) and (b) and the earth.

Two signals in phase or in phase opposition whose frequency is a submultiple of the network frequency, are sent through the user line after absence of foreign voltages has been ascertained. At time intervals of predetermined duration, the average value of the circulating current having the component in phase or in quadrature is measured.

"CIRCUIT ARRANGEMENT FOR MEASURING THE ELECTRIC CHARACTERISTICS OF USER TELEPHONE LINES"

The present invention relates to a circuit arrangement particularly for use in telephone exchanges for measuring the following parameters of user telephone lines:
- direct or alternating foreign voltages;
- insulation resistance between a wire $a$ and a wire $b$;
- terminal capacity;
- insulation resistance between wires $a$ and $b$ and the earth.

It is necessary periodically to control the above specified parameters in telephone exchanges to make sure that proper conditions exist which optimize the quality of the signals exchanges between telephone sets and the exchange.

Some telephone exchanges are connected to a very large number of users (e.g. some tens of thousands), and thus, to minimize the time spent to detect malfunctioning or absence of the said optimum conditions the circuit arrangement designed to carry out such operations must be capable of measuring the parameters of each loop in a very short time, while ensuring good measuring precision even in the presence of typical noise in the user lines.

It should be noted that a line can present noise due to voltage induced by distribution networks. The frequency of such a noise is

0033858

50 or 16.6 Hz in Italy.

An object of the present invention is to provide a particularly simple and economic circuit arrangement designed to detect the said parameters in short time intervals (some seconds).

To this end, a circuit arrangement according to the invention is arranged to send a signal on the user line at a frequency which is a fraction of the network frequency, and to measure the average value of the current circulating along the loop during a predetermined time interval.

Thus, the circuit arrangement according to the invention comprises in combination the following characteristic elements:

- first means designed to generate a first signal whose frequency is a fraction of the network frequency;

- second means controlled by the said first signal and designed to provide an output signal on its first output and an output signal on its second output, respectively in phase opposition with respect to the said first signal, and to provide on its third output a second signal whose level is proportional to the current circulating in the loop;

- a first switching device arranged to connect the first and the second output of the said second means to a respective wire $\underline{a}$ or $\underline{b}$ of the user loop, or the first of the said output to both wires of the loop;

- a first integrating circuit arranged to integrate the said second signal for a time interval equal to half a cycle of the first signal in phase with it;

- a second integrating circuit arranged to integrate the said second signal for a time interval equal to half a cycle of the first signal in advance with respect to it by $\pi/2$;

- a third integrating circuit arranged to integrate the said second rectified signal for a time interval equal to one period of

- 3 -

0033858

the first signal in phase with it;

- means arranged to measure the amplitude of the signals available at the output of the said integrated circuit.

Further features of the invention will appear from the following description of a non-limiting embodiment with reference to the accompanying drawings, in which:

- figure 1 illustrates an equivalent diagram of a user telephone line;

- figure 2 shows a block diagram of a circuit arrangement in accordance with the invention;

- figure 3 shows in detail testing means MP of figure 2 in accordance with the present invention;

- figure 4 shows in detail second means SM of figure 2 in accordance with the present invention;

- figure 5 shows in detail timing means MT of figure 2 in accordance with the present invention;

- figure 6 shows in detail measuring means MN of figure 2 in accordance with the present invention;

- figure 7 shows wave-forms concerning the preceding figures.

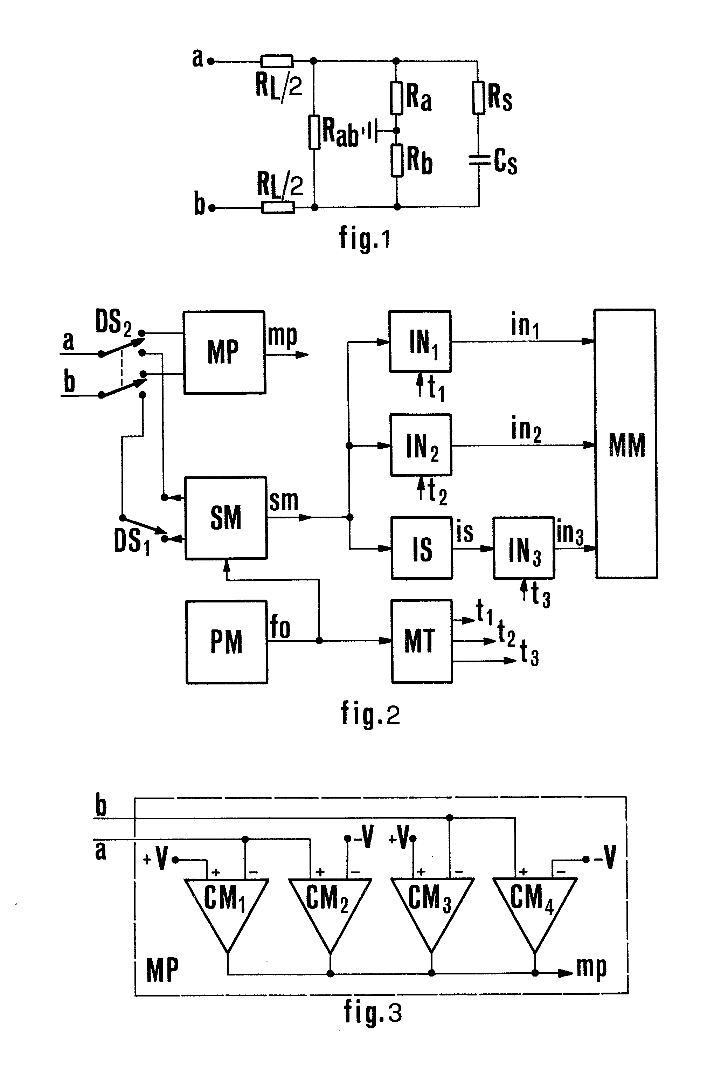

A frequency of a few Hz has been adapted as a measuring frequency, and thus a user telephone loop can be considered as a concentrate-constant circuit of the type illustrated in figure 1 where the meaning of the symbols shown in it is as follows:

- $R_L$ indicates the total resistance of the line;

- $R_{ab}$ indicates the resiatnce between the wires $\underline{a}$ and $\underline{b}$;

- $R_a$ indicates the resistance between the wire $\underline{a}$ and the earth;

- $R_b$ indicates the resistance between the wire $\underline{b}$ and the earth;

- $R_S$ indicates the resistance of the ringer winding;

- $C_S$ indicates the capacity in series with the ringer.

It should be noted that $R_S$ and $C_S$ can indicate an equivalent circuit of a plurality of ringers connected in parallel with one another. It should also be noted that the resistance derived between the wires $\underline{a}$ and $\underline{b}$ can be evaluated only as a parallel connection between $R_{ab}$ and $(R_a + R_b)$ indicated by $R_D$ below.

To study the circuit, the following reasonable simplifying hypothesis have been adopted;

- the indictive reactance of the ringer winding is negligible with respect to the measuring frequency;

- for evaluating the derived resistance between the wires $\underline{a}$ and $\underline{b}$, it is assumed $R_a = R_b$;

- the presence of noise voltages is not shown in figure 1 since the adopted method has a (theoretical) infinite rejection with respect to the noise.

Figure 2 shows a block diagram of the circuit arrangement in accordance with the invention, the circuit arrangement comprising first means PM designed to generate an output sinusoidal signal having a frequency $f_0$ which is submultiple of the network frequency.

The signal $f_0$ is sent to timing means MT and to second means SM designed to generate two signals in phase opposition with respect to one another on their first two outputs and also to generate, on a third output thereof, a signal $\underline{sm}$ proportional to the current circulating in the line.

A first switching device $DS_1$ is designed to connect the first output of the means SM to respective wires $\underline{a}$ and $\underline{b}$ of the line (and thus two signals in phase opposition are available on the wires), or to connect the first of the said outputs to both wires (on which two signals in phase are thus available).

A second switching device $DS_2$ is arranged to connect the wires of the line to the said second means SM, or to testing means MP designed to detect the presence of foreign voltages in the line.

The signal $\underline{sm}$ is sent to a first, a second and a third integrating circuit $IN_1$, $IN_2$, and $IN_3$ which are enabled by respective signals

$t_1$, $t_2$ and $t_3$ generated by the said timing means MT.

The output of units IN is connected to measuring means MM designed to evaluate the level of the signal available at the output of each integrated circuit.

The first operation to be effected is checking the absence of following voltages before proceeding to detect the electric characteristics of the line.

To this end, the switching device $DS_1$ is positioned so as to connect the telephone line to the testing means MP which is illustrated in more details in figure 3.

The means MP comprises a first pair of comparators $CM_1$ and $CM_2$ which respectively detect the presence of positive or negative foreign voltages on the wire a, and also comprises a second pair of comparators $CM_3$ and $CM_4$ which respectively detect positive or negative foreign voltages on the wire b.

Should anyone of the said comparators detect the presence of a voltage exceeding the threshold voltage V applied to the other input, the output mp is energized and thus prosecution to successive measuring operation is prevented.

If instead such testing operations give a negative result, the resistance $R_D$ between the wires a and b is measured after the switching device $DS_2$ has been actuated.

The result of such a measuring operation gives indications about the state of deterioration of the insulation between the wires.

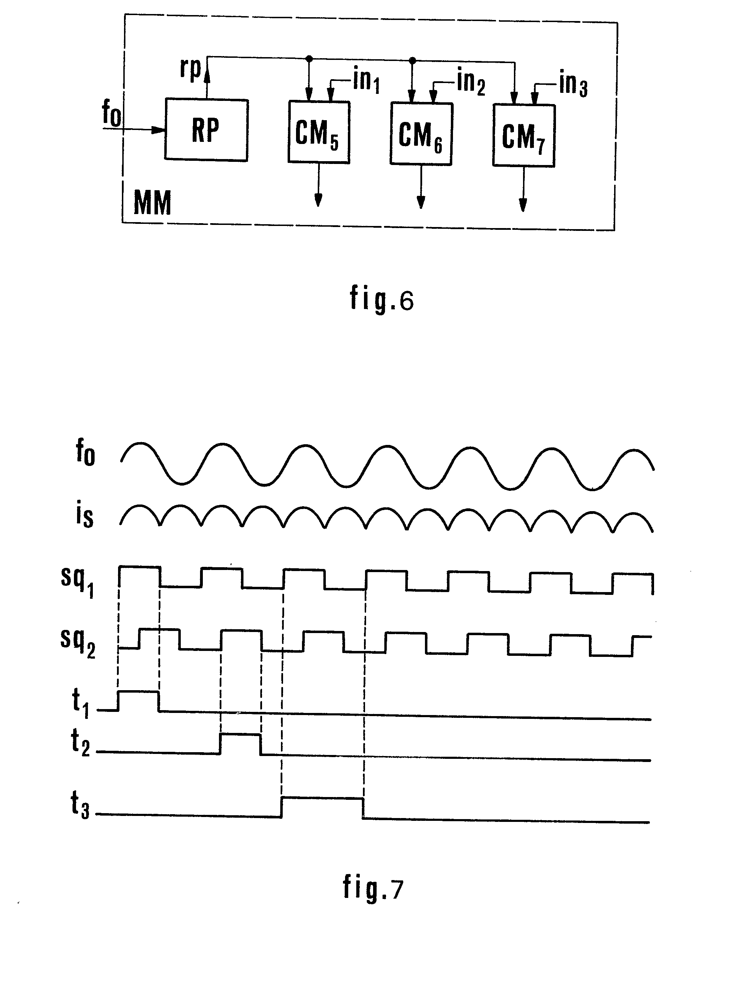

The carrying out of such a measure comprises generation by the said second means SM of two signals in phase opposition at a frequency $f_o$ on the two wires a and b, and also generation by the means MT of the signal $t_1$ (see figure 7) which enables the integrating circuitIN to integrate, for half a cycle of the signal at frequency $f_o$, the signal sm whose value is proportional to the current circulating in the line.

The said means MM are designed to measure the signal $in_1$ available at the output of the unit $IN_1$ at the end of the integrating interval.

The measure of value of the terminal capacity gives, instead, indication about the state of the line. When such a measure indicates the absence of user termination, it is likely that the loop is interrupted. Such a measurement is effected in the same way as the previous measurements and comprises enabling the integrating circuit $IN_2$ by the signal $t_2$ which is shifted 90° out phase in advance with respect to $f_0$.

Integration of the signal $sm$ during the time interval defined by $t_2$ makes it possible to obtain a signal proportional to the quadrature component in advance with respect to the current circulating in the loop. Also in this case an integration period equal to half a cycle of $f_0$ has been adopted to reduce the measuring times. The signal available at the output of the unit $IN_2$ is measured by the unit MM. The measurement of the resistance $R_t = R_a/R_b$ between the wires $a$ and $b$ and the earth gives instead indications about the deterioration of the insulation from the earth.

The carrying out of such a measurement comprises switching device $DS_1$ which causes the signal in phase with $f_0$ available at the first output of the said second means SM being sent through both the wire $a$ and the wire $b$, and also comprises generation of the signal $t_3$ by the unit MT. The signal $t_3$ enables the unit $IN_3$ to integrate the signal $sm$ which is rectified by way of synchronous inverter IS with the voltage for a time interval equal to one cycle of the signal $f_0$. Integration for a whole cycle has the function of eliminating the influence of the said direct noise voltages.

At the end of the integratiion interval the means MM measure the intensity of the signal available at the output of the unit $IN_3$.

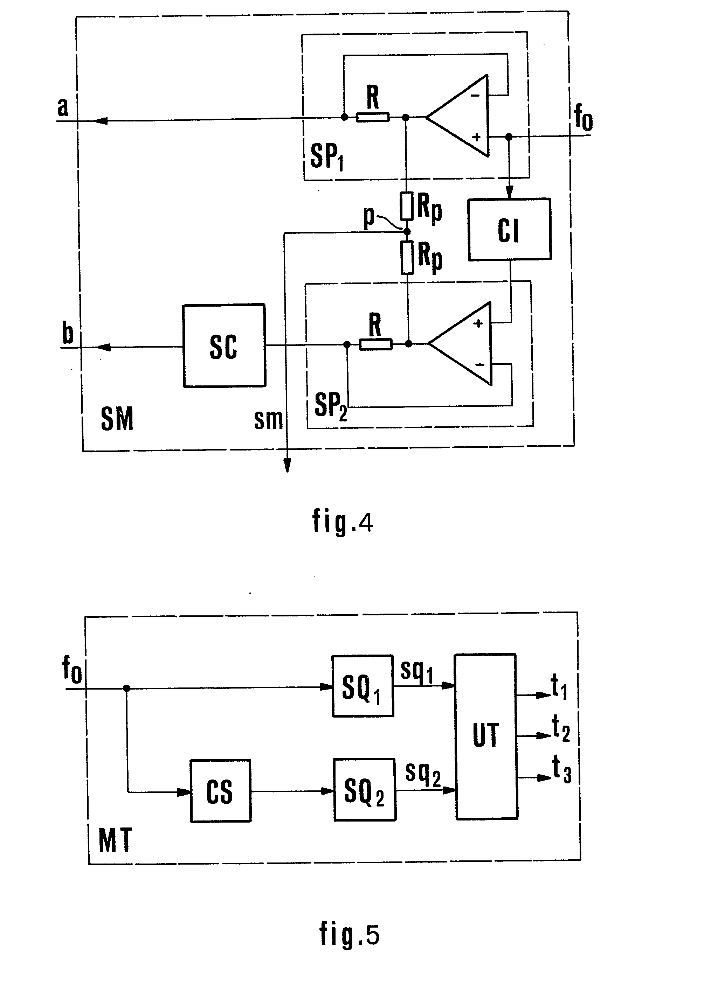

Figure 4 shows a preferred embodiment of the said second means SM which comprises a first control stage $SP_1$ arranged to receive on its output the signal at the frequency $f_O$ which signal is also sent to an inverting circuit CI designed to send the 180° out of phase signal $f_O$ to a second control stage $SP_2$.

Each control stage SP comprises a differential amplifier whose non-inverting input receives the signal at frequency $f_O$ and whose inverting input receives the output signal by way of a resistance R.

Such units SP, when seen from the wires a and b, behave as ideal voltage generators owing to negative feedback.

The signal available at the output of the unit SP is directly sent to the wire a, whereas the signal available at the output of the unit $SP_2$ is sent to the wire b by way of a current mirror SC.

An electrical branch is connected in parralel to the units $SP_1$ and $SP_2$ and comprises two equal series-connected resistances Rp between which the said signal sm is derived at the connection point p, the signal being sent to the integrating circuits IN.

While measuring the resistance between the wires a and b, in the absence of circulating current, the point p is at potential zero.

It should also be noted that, even in the presence of a circulating current, the point p is at potential zero, unless the current mirror SC is provided.

Bearing in mind that such a circuit is capable of inverting the direction of the current in the branch in which it is inserted without changing the sign of the voltage at its terminals, it should be clear that the point p is affected, while still remaining at the potential zero in the absence of current i, by a potential difference equal to 2.i.R, when i differs from zero.

While measuring the resistance $R_t$, in the absence of circulating current, the point p is always at zero potential, whereas in the presence of current i it undergoes a potential variation equal to i.R.

Figure 5 shows an embodiment of the timing means MT which receive

the signal $f_O$ coming from a first clipping circuit $SQ_1$ which generates on its output a signal $sq_1$ designed to be sent to a timing unit UT arranged to obtain the signals $t_1$ and $t_3$ from such a signal.

The means MT also comprises a circuit CS, which is arranged to dephase in advance through 90° the signal $f_O$ and has its output connected to a second clipping circuit $SQ_2$ designed to send a signal $sq_2$ to the unit UT to generate the signal $t_2$.

Figure 6 shows an embodiment of the measuring means MM which comprises a peak rectifier RP which receives on its input the signal $f_O$ and generates a continuous output signal rp designed to be used to evaluate the intensity of the signal available at the output of the unit IN.

The means MM also comprises comparators $CM_5$, $CM_6$ and $CM_7$ whose first input receives the signal rp and whose second input receives a respective output signal in from the integrating circuit.

The use of a reference signal obtained from $f_O$ makes it possible to obtain a measure not affected by errors due to amplitude variations in the signal $f_O$ since they would determine variations of the same sign in both sm and rp.

The unit $CM_5$, $CM_6$ and $CM_7$ thus energize their output if the signal in available on their second input exceeds the threshold determined by the value of rp.

According to a further embodiment, the comparators CM comprise as many analogical-digital converters designed to express in digital form the level of the signal available at the output of a respective integrating circuit IN. Such converters can be connected to display means for reading the value of the measured parameters.

0033858

"CIRCUIT ARRANGEMENT FOR MEASURING THE ELECTRIC CHARACTERISTICS OF USER TELEPHONE LINES"

CLAIMS

1) A circuit arrangement for measuring the electric characteristics of user telephone lines, characterized in that it comprises:

- first means (PM) designed to generate a first signal ($f_o$) whose frequency is a fraction of the network frequency;

- second means (SM) controlled by the said signal and designed to provide an output signal on its first output and an output signal on its second output, respectively in phase and in phase opposition with respect to the said first signal (sm) whose level is proportional to the current circulating in the loop;

- a first switching device ($DS_1$) arranged to connect the first and the second output of the said second means (SM) to a respective wire a or b of user loop, or the first of the said outputs to both wires a and b;

- a first integrating circuit ($IN_1$) arranged to integrate the said second signal (sm) for a time interval equal to half a cycle of the first signal ($f_o$) in phase with it;

- a second integrating circuit ($IN_2$) arranged to integrate the said second signal (sm) for a time interval equal to half a cycle of the first signal ($f_o$) in advance with respect to it by $\pi/2$;

- a third integrating circuit ($IN_3$) arranged to integrate the said second rectified signal (is) for a time interval equal to one cycle or period of the first signal ($f_o$) in phase with it;

- means (MM) arranged to measure the amplitude of the signals (in) available at the output of the said integrating circuit (IN).

2) A circuit arrangement as claimed in claim 1, characterized in that it comprises a second switching device ($DS_2$) arranged to respectively connect the wires a and b of the user telephone line to the first two outputs of the said second means (SM), or to test means (MP) designed to energize their output in response to detection of foreign voltages across the loop, and comprising a first pair of comparators ($CM_1$ and $CM_2$), or a second pair of comparators ($CM_3$ and $CM_4$) one input of which is connected to the said wire a or the said wire b, and having the remaining two inputs respectively connected to a positive or negative reference voltage (V).

3) A circuit arrangement as claimed in claim 1, characterized in that the said second means (SM) comprises:

- a first control stage ($SP_1$) designed to send the said first signal ($f_o$) on the first output;

- an inverting circuit (CI) designed to effect an 180° inversion in the phase of the said first signal ($f_o$);

- a second control stage ($SP_2$) designed to send on its second output the signal available at the output of the inverting circuit (CI);

- a current mirror (SC) connected to the output of the second control stage ($SP_2$);

- an electric branch at the central point of which the signal (sm) from the said third output is available, the said electric branch comprising two equal series-connected resistances (Rp) having their free terminal connected to the output of a respective control stage (SP).

4) A circuit arrangement as claimed in claim 1, characterized in that it comprises timing means (MT) comprising:

- a first clipping circuit ($SQ_1$) designed to generate the said first clipped output signal ($f_o$);

- a dephasing circuit (CS) designed to generate the said first output signal ($f_o$) 90°-dephased in advance;

- a second clipping circuit ($SQ_2$) designed to clip the signal available at the output of the dephasing circuit (CS);

- a timing unit (UT) receiving the signal available at the output of the said clipping circuit (SQ), and arranged to generate control output impulses (t) for the said integrating circuit (IN).

5) A circuit arrangement as claimed in claim 1, characterized in that the said measuring means (MM) comprises a first, a second and a third comparating circuit ($CM_5$, $CM_6$ and $CM_7$) whose first input is connected to a respective output (an) of the said integrated circuit (IN), whereas the second input receives a reference voltage available at the output of a rectifying circuit (CR) designed to generate an output signal having a level equal to the peack voltage of the said first signal ($f_o$).

6) A circuit arrangement as claimed in claim 1 characterized in that the said measuring means comprises a plurality of analogic-digital converters which translate into digital form the level of the signal available at the output of a respective integrating circuit (IN).

0033858

fig.1

fig.2

fig.3

0033858

fig.4

fig.5

fig.6

fig.7

European Patent Office

**EUROPEAN SEARCH REPORT**

| | DOCUMENTS CONSIDERED TO BE RELEVANT | | CLASSIFICATION OF THE APPLICATION (Int. Cl.³) |
|---|---|---|---|
| Category | Citation of document with indication, where appropriate, of relevant passages | Relevant to claim | |
| | US – A – 4 113 998 (ASHDOWN) <br><br> * column 2, lines 19-65; column 3, lines 62-66; column 4, lines 48-55; column 11, line 66 to column 12, line 6; column 12, line 64 to column 13, line 2 * <br><br> --- <br><br> US – A – 3 916 381 (JOHNSON) <br><br> * column 2, lines 40-44; column 5, lines 5-22; figure 4 * <br><br> --------- | 1-3,6 <br><br><br><br><br><br><br><br><br> 2 | H 04 M 3/30 <br> G 01 R 27/16 |

TECHNICAL FIELDS SEARCHED (Int. Cl.³)

H 04 M 3/30
          3/28
G 01 R 27/16
G 01 R 27/18

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 18-03-1981 | VANDEVENNE |

EPO Form 1503.1  06.78